# EUROPÄISCHE PATENTANMELDUNG

(11) **EP 2 957 894 A1**
(43) Veröffentlichungstag der Anmeldung: **23.12.2015**
(21) Anmeldenummer: 14172657.0
(22) Anmeldetag: 17.06.2014
(51) Int. Cl.: G01N 21/51, G01J 3/44, G01N 21/65, G01N 33/49, G01N 33/487, G01N 33/493, G01N 21/47

(54) **Konfokales Streulichtanalysesystem**

(71) Anmelder: Siemens Healthcare Diagnostics Products GmbH, 35041 Marburg (DE)
(72) Erfinder: Meller, Paul, 61273 WEHRHEIM (DE); Beier, Axel, 16552 Schildow (DE); Nerreter, Stefan, 15754 Heidesee OT Blossin (DE)

(57) **Zusammenfassung**

Die Erfindung betrifft ein Streulichtanalysesystem (1) mit mindestens einem Mittel (8) zur Erzeugung eines Strahlenbündels entlang einer optischen Achse (30), mindestens einer Aufnahmeposition (4) für eine Messzelle (2), mindestens einem Mittel (25, 26, 27, 28, 29) zur Fokussierung eines Strahlenbündels, mindestens einer Blende (14) mit einer definierten Öffnung (17) und mindestens einem Fotodetektor (6), wobei das Mittel (8) zur Erzeugung eines Strahlenbündels ein in mindestens einer Richtung senkrecht zur optischen Achse (30) konvergentes Strahlenbündel erzeugt und wobei das Mittel (8) zur Erzeugung eines Strahlenbündels, die Aufnahmeposition (4) für eine Messzelle (2), das Mittel (25, 26, 27, 28, 29) zur Fokussierung eines Strahlenbündels, die Blende (14) und der Fotodetektor (6) derart angeordnet sind, dass das konvergente Strahlenbündel in einer in der Aufnahmeposition (4) angeordneten Messzelle (2) einen ersten Fokus (35) ausbildet und nach dem Durchtritt durch eine in der Aufnahmeposition (4) angeordnete Messzelle (2) wenigstens teilweise auf das Mittel (25, 26, 27, 28, 29) zur Fokussierung eines Strahlenbündels trifft und wobei das Strahlenbündel nach Wechselwirkung mit dem Mittel (25, 26, 27, 28, 29) zur Fokussierung des Strahlenbündels einen zweiten Fokus (37) ausbildet und wobei die Öffnung (17) der Blende (14) im Bereich des zweiten Fokus (37) positioniert ist, und das Strahlenbündel dann wenigstens teilweise auf den Fotodetektor (6) trifft.

## Beschreibung

Die Erfindung betrifft ein für ein Analysegerät geeignetes, konfokales Analysesystem mit einer Lichtquelle, einer Aufnahmeposition für eine Messzelle und einem Fotodetektor, die derart angeordnet sind, dass ein von der Lichtquelle ausgehender Lichtstrahl durch die Messzelle auf den Fotodetektor trifft.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z. B. Transferarme mit Greiffunktion, Transportbänder oder drehbare Transporträder, sowie Vorrichtungen zum Transfer von Flüssigkeiten, wie z. B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen, in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Insbesondere können moderne Analysegeräte mit einem Streulichtanalysesystem ausgestattet sein. Mittels eines Nephelometriesystems lässt sich beispielsweise die Konzentration feinverteilter, kolloidaler Teilchen in Flüssigkeiten oder Gasen quantitativ bestimmen. Wird eine Suspension kleiner Partikel in einen Lichtstrahl verbracht, so wird ein Teil des eingetretenen Lichtes absorbiert, ein anderer Teil, auch als Primärstrahl bezeichnet, verlässt die Suspension ungestreut, und wieder ein anderer Teil wird seitlich zum eintretenden Strahl gestreut. Bei der Nephelometrie wird dieses seitlich austretende Streulicht gemessen.

Die Nephelometrie wird vor allem für den quantitativen oder qualitativen Nachweis von Analyten, beispielsweise Proteinen, eingesetzt, die sich bevorzugt mittels einer spezifischen Bindungsreaktion zwischen spezifischen Bindungspartnern, z.B. mittels Antigen-Antikörper-Bindung, nachweisen lassen.

Ein Nephelometriesystem umfasst üblicherweise mindestens ein Mittel zur Erzeugung eines Strahlenbündels, welches eine Lichtquelle umfasst und mindestens einen Fotodetektor sowie mindestens eine Aufnahmeposition für eine Messzelle.

Auf dem Markt existieren unterschiedliche Bauweisen, die sich in der Anordnung von Lichtquelle, Aufnahmeposition für die Messzelle und Fotodetektor unterscheiden. Siehe hierzu auch z.B. Diamandis, E.P. und Christopoulos, T.K., Immunoassay, Academic Press, 1996, Kapitel 17, S. 363 - 387.

Beispielsweise kann in einer Bauweise der Fotodetektor seitlich zum von der Lichtquelle ausgesandten Lichtstrahl angeordnet sein, um das gestreute Licht unter einem Winkelbereich um 90° zur Richtung des von der Lichtquelle ausgesandten Lichtstrahls zu erfassen. Die Intensität des Streulichts, welches in Winkelbereiche um 90° zur Richtung des von der Lichtquelle ausgesandten Lichtstrahls gestreut wird, kann relativ niedrig sein, und die Beeinflussung der Messung durch den von der Lichtquelle ausgesandten nicht gestreuten Teil des Lichtstrahls, der als Primärstrahl bezeichnet wird, ist relativ gering.

In einer anderen Bauweise können Lichtquelle, Aufnahmeposition und Fotodetektor derart angeordnet sein, dass der Fotodetektor das gestreute Licht unter Winkeln oder Winkelbereichen um die Ausbreitungsrichtung des von der Lichtquelle ausgesandten Lichtstrahls erfasst, in denen die Intensität des Streulichts relativ hoch ist. Den Fotodetektor erreicht in dieser Geometrie jedoch nicht nur das Streulicht, sondern auch der Primärstrahl. Da jedoch nur der gestreute Teil des Lichtes zum Messergebnis beitragen soll und Licht des Primärstrahls, das auf den Detektor trifft, letztlich nur zu einer Verschlechterung des Signal-Rausch-Abstandes führt, ist für eine Optimierung des Messergebnisses eine möglichst vollständige Ausblendung des Primärstrahls erforderlich.

Hierfür werden optische Blenden eingesetzt. Diese werden mittels dünner Befestigungen wie z. B. Drähten im Strahlengang gehalten und hinsichtlich ihrer Größe und Form so angepasst, dass sie den Primärstrahl wenigstens ausreichend, bevorzugt vollständig ausblenden, so dass möglichst ausschließlich Streulicht auf den Detektor trifft.

Eine wichtige Rolle bei der weiteren Optimierung des Messergebnisses und der Erhöhung des Signal-Rausch-Abstandes spielt, dass stets Signal aus einem definierten, begrenzten Streuvolumen innerhalb der Probe auf den Detektor geleitet, gemessen und ausgewertet werden soll. Aufgrund von Eigenschaften der Messzelle, wie beispielsweise gekrümmten Oberflächen, Kratzern, sonstigen Beschädigungen, Spannungsdoppelbrechung insbesondere bei z.B. aus Polystyrol gefertigten Kunststoffmesszellen, Streuung im Material der Messzelle oder Ungenauigkeiten bezüglich der Positionierung der Messzelle relativ zum Strahlengang können Effekte auftreten, die das Messsignal stören. Ungenauigkeiten bezüglich der Positionierung der Messzelle relativ zum Strahlengang treten besonders bei Streulichtanalysesystemen auf, bei denen die Messzelle und das Mittel zur Erzeugung eines Strahlenbündels während der Messung relativ zueinander bewegt werden. Dabei sind störende Effekte, die durch die Messzelle hervorgerufen werden, möglichst von Signal aus dem erwähnten Streuvolumen der Probe abzutrennen.

Bisherige Streulichtanalysesysteme und insbesondere Nephelometriesysteme verwenden häufig Messzellen, die beispielsweise als hochpräzise Kunststoffkörper mit planen Oberflächen ausgeführt sind. Bei dieser Art von Messzellen treten die oben erwähnten parasitären Effekte nur in vergleichsweise geringem Umfang auf, so dass die Messungen dadurch nicht in erheblichem Maße beeinflusst werden. Jedoch sind solche Messzellen mit vergleichsweise hohen Kosten verbunden. Nicht-kreiszylinderförmige Messzellengeometrien sind in Automaten wegen der Richtungsabhängigkeit erheblich schwieriger zu prozessieren.

Bisher war es beispielsweise nicht möglich, in Streulichtanalysesystemen und insbesondere in Nephelometriesystemen Messzellen von geringerer optischer Qualität einzusetzen, wie beispielsweise kostengünstige Schüttgut-Einwegmesszellen aus Kunststoff mit runden Querschnitten.

Es ist daher Aufgabe der Erfindung, ein
Streulichtanalysesystem zur Verfügung zu stellen, welches eine verbesserte Messqualität bietet, indem Signale aus dem Streuvolumen innerhalb der Probe von Störsignalen, die durch die Messzelle oder anderen Umgebungseinflüssen hervorgerufen werden, abgetrennt werden.

Diese Aufgabe wird erfindungsgemäß durch die im Folgenden beschriebenen Gegenstände und Verfahren gelöst.

Es wurde gefunden, dass ein verbessertes
Streulichtanalysesystem für ein Analysegerät erreicht werden kann, wenn das im Bereich eines Fokus eines Strahlenbündels innerhalb einer Probe gestreute Licht konfokal auf die Ebene einer raumfilternden Blende abgebildet wird, welche Signale aus dem Streuvolumen im Bereich des Fokus des Strahlenbündels innerhalb der Probe von Störsignalen, die durch störende Effekte der Messzelle hervorgerufen werden, abtrennt.

Dies wird mit Hilfe eines Streulichtanalysesystems gemäß Anspruch 1 erzielt.

Gegenstand der vorliegenden Erfindung ist ein Streulichtanalysesystem mit mindestens einem Mittel zur Erzeugung eines Strahlenbündels, mindestens einer Aufnahmeposition für eine Messzelle, mindestens einem Mittel zur Fokussierung eines Strahlenbündels, mindestens einer Blende mit einer definierten Öffnung und mindestens einem Fotodetektor, wobei das Mittel zur Erzeugung eines Strahlenbündels ein in mindestens einer Richtung senkrecht zur optischen Achse konvergentes Strahlenbündel erzeugt und wobei das Mittel zur Erzeugung eines Strahlenbündels, die Aufnahmeposition für eine Messzelle, das Mittel zur Fokussierung eines Strahlenbündels, die Blende und der Fotodetektor derart angeordnet sind, dass das konvergente Strahlenbündel in einer in der Aufnahmeposition angeordneten Messzelle einen ersten Fokus ausbildet und nach dem Durchtritt durch eine in der Aufnahmeposition angeordnete Messzelle wenigstens teilweise auf das Mittel zur Fokussierung eines Strahlenbündels trifft und wobei das Strahlenbündel nach Wechselwirkung mit dem Mittel zur Fokussierung des Strahlenbündels einen zweiten Fokus ausbildet und wobei die Öffnung der Blende im Bereich des zweiten Fokus positioniert ist, und das Strahlenbündel dann wenigstens teilweise auf den Fotodetektor trifft.

Dies hat den Vorteil, dass mittels des konfokalen Prinzips die Signale aus dem Streuvolumen innerhalb der Probe selektiert werden und so von störenden Einflüssen der Messzelle oder der Umgebung getrennt werden. Weiterhin hat dies den Vorteil, dass die Position der Messzelle relativ zum Verlauf des Primärstrahls nur einen vergleichsweise geringen Einfluss auf die Position hat, an der das Streulicht auf den Detektor trifft. Insbesondere bei z.B. Messzellen mit runden oder ovalen Querschnitten wandert diese Position nur vergleichsweise geringfügig.

In besonders bevorzugter Ausführungsform handelt es sich bei dem erfindungsgemäßen konfokalen Streulichtanalysesystem um ein Nephelometer zur Streulichtmessung.

Unter einem "Nephelometer" oder "Nephelometriesystem" ist eine Messeinheit zu verstehen, die mindestens eine Lichtquelle und mindestens einen Lichtdetektor aufweist und die so ausgestaltet ist, dass sie die Messung der Intensität des in einer Probe gestreuten Lichts ermöglicht. Typischerweise ist die Anordnung von Lichtquelle und Lichtdetektor so gewählt, dass das Streulicht messbar ist, das von in der Probe nachzuweisenden Makromolekülen, beispielsweise von Partikelaggregaten, die infolge einer Analyt-abhängigen Reaktion in einem Reaktionsansatz entstehen, gestreut wird.

In bevorzugter Ausführungsform bildet das Strahlenbündel in zwei zueinander senkrechten Richtungen senkrecht zur optischen Achse in einer in der Aufnahmeposition angeordneten Messzelle einen Fokus aus. Ein definiertes Volumen aus dem Bereich des Fokus wird konfokal auf mindestens einen Fotodetektor abgebildet. Dies hat den Vorteil, dass ein noch größerer Anteil der störenden Einflüsse der Messzelle unterdrückt werden kann. Somit kann eine Erhöhung des Signal-Rausch-Abstandes insbesondere auch bei vergleichsweise kleinen Messzellen mit beispielsweise ovalen oder runden Querschnitten erreicht werden.

In bevorzugter Ausführungsform spannen das konvergente Strahlenbündel und die optische Achse in mindestens einem Bereich zwischen dem Mittel zur Erzeugung eines Strahlenbündels und der Aufnahmeposition für eine Messzelle einen Winkel von 2 bis 45 Grad, bevorzugt von 5 bis 25 Grad, ganz besonders bevorzugt von 5 bis 15 Grad auf. Diese bevorzugten Winkel oder Winkelbereiche hängen beispielsweise auch von Anforderungen des Messguts ab wie z.B. Größe und Form der Partikel, deren Brechzahl, Oberflächenbeschaffenheiten und/oder Koagulationsverhalten. Ferner sind neben den Eigenschaften der Probe bei der Wahl von besonders günstigen Winkeln oder Winkelbereichen auch die optischen Eigenschaften und die Geometrie, einschließlich der Größe der Messzelle zu berücksichtigen.

In bevorzugter Ausführungsform umfasst das Mittel zur Erzeugung eines Strahlenbündels eine Lichtquelle und eine Linse, bevorzugt eine Lichtquelle und eine Zylinderlinse. Bevorzugt ist die Linse zwischen Lichtquelle und Aufnahmeposition für die Messzelle angeordnet.

In weiterer bevorzugter Ausführungsform umfasst das Mittel zur Erzeugung eines Strahlenbündels eine Lichtquelle, eine erste Linse oder ein erstes Linsensystem, eine Blende mit einer Blendenöffnung und eine zweite Linse oder ein zweites Linsensystem.

In bevorzugter Ausführungsform ist die Linse eine Sammellinse oder ein Objektiv. Bevorzugt erzeugt die Sammellinse einen Fokus des Strahlenbündels, der bevorzugt im Zentrum des Querschnitts einer in der Aufnahmeposition angeordneten Messzelle liegt. Dies hat den Vorteil, dass das selektierte Streuvolumen im Bereich des Zentrums des Querschnitts der Messzelle liegt und Einflüsse der Messzelle auf das Streuvolumen innerhalb der Probe weiter reduziert werden.

Ein Lichtstrahl oder Lichtstrahlen werden auch als Strahlenbündel bezeichnet.

Bevorzugt handelt es bei dem Streulichtanalysesystem um ein zentriertes System, bei dem die optischen Achsen der optischen Elemente zusammenfallen. Bevorzugt breitet sich das Strahlenbündel entlang der optischen Achse aus. Bevorzugt liegt dabei die optische Achse im Bereich des Zentrums des Querschnitts des Strahlenbündels.

In vorteilhafter Ausgestaltung umfasst die Lichtquelle mindestens einen Laser, eine lichtemittierende Diode (LED), eine Glühlampe und/oder eine Gasentladungslampe.

In besonders vorteilhafter Ausgestaltung umfasst die Lichtquelle mindestens eine Laserdiode. Hierdurch kann in besonders einfacher Weise ein kohärenter und kollimierter Lichtstrahl erzeugt werden, der für die Nephelometrie besonders vorteilhafte Eigenschaften hat. Beispielsweise weist der Lichtstrahl eine geringe Divergenz auf und erfährt daher über die Laufweite vergleichsweise wenig Aufweitung. Dadurch sind Primärstrahl und gestreutes Licht im Fotodetektor besonders gut voneinander abgrenzbar. Dies gilt auch nach Streuung, Bündelung oder Umlenkung des Lichtstrahls mittels Linsen und Spiegeln.

Die Verwendung von mindestens einer Laserdiode als Lichtquelle ermöglicht es in besonders einfacher Ausgestaltung, die Stoppblende derart anzuordnen, dass der gesamte Primärstrahl der Laserdiode auf die Stoppblende trifft. Hierdurch wird von dem Fotodetektor ausschließlich Streulicht aufgenommen und zur Messung verwendet.

Bei dem Lichtdetektor handelt es sich bevorzugt um eine Photodiode, die sichtbares Licht, in manchen Ausführungen auch IR-, oder UV-Licht durch den inneren Photoeffekt in einen elektrischen Strom bzw. eine Spannung umwandelt.

Die Begriffe "Lichtdetektor" und "Fotodetektor" werden im Rahmen dieser Erfindung synonym verwendet.

Alternativ handelt es sich bei dem Lichtdetektor um einen CCD-Sensor. CCD-Sensoren bestehen aus einer Matrix oder einer Zeile mit lichtempfindlichen Photodioden. Wenn Messungen bei verschiedenen Wellenlängen durchgeführt werden sollen, kann jedes Element des CCD-Sensors als Photodetektor dienen, was den apparativen Aufbau erheblich vereinfacht.

Ebenso kann jedoch vorgesehen sein, dass es sich bei dem Lichtdetektor um eine Photozelle, einen Siliziumphotodetektor, einen Avalanchephotodetektor oder einen Photomultiplier handelt.

In weiterer vorteilhafter Ausgestaltung emittiert die Lichtquelle Licht mit einer Wellenlänge zwischen 200 nm und 1400 nm. In einer bevorzugten Ausgestaltung emittiert die Lichtquelle Licht mit einer Wellenlänge zwischen 300 und 1100 nm.

Grundsätzlich kann das Streulichtanalysesystem weiterhin noch Filter, optische Elemente (z.B. Linsen zum Aufbau eines Kondensors), Regelelektronik, Auswerte- und Ausleseelektronik und/oder eine Spannungsversorgung aufweisen.

In bevorzugter Ausführungsform des Streulichtanalysesystems ist zwischen der Aufnahmeposition für die Messzelle und dem Fotodetektor eine Stoppblende derart positioniert, dass das Strahlenbündel wenigstens teilweise auf die Stoppblende trifft. Vorteilhafterweise trifft dabei der nicht gestreute Teil des Strahlenbündels wenigstens teilweise, bevorzugt vollständig auf die Stoppblende. Dies hat den Vorteil, dass Teile des Strahlenbündels, die nicht an der Messzelle oder in der Messzelle gestreut wurden, auf die Stoppblende gelenkt und somit eliminiert werden können, wohingegen gestreute Anteile des Strahlenbündels nicht auf die Stoppblende treffen und beispielsweise mittels eines Fotodetektors gemessen und analysiert werden können. Somit kann weiterhin auch eine Erhöhung des Signal-Rausch-Abstandes erreicht werden.

In bevorzugter Ausführung ist die Stoppblende in der Form eines Ovals oder eines Kreises ausgebildet. Bevorzugt umfasst ein erfindungsgemäßes Streulichtanalysesystem ferner mindestens eine Halterung zur Befestigung der Stoppblende.

In vorteilhafter Ausgestaltung umfasst das Streulichtanalysesystem mindestens zwei Aufnahmepositionen für jeweils eine Messzelle, wobei wenigstens das mindestens eine Mittel zur Erzeugung eines Strahlenbündels, das mindestens eine Mittel zur Fokussierung eines Strahlenbündels, die mindestens eine Blende mit einer definierten Öffnung und der mindestens eine Fotodetektor relativ zu den mindestens zwei Aufnahmepositionen bewegbar sind, vorzugsweise auf einer Kreisbahn bewegbar. Dies hat den Vorteil, dass ein höherer Probendurchsatz erzielt werden kann. Ferner kann es vorteilhaft sein, wenn die Aufnahmepositionen für die Messzellen ortsfest angeordnet sind. So können beispielsweise Erschütterungen und Zentripedalkräfte, welche die Probe in der Messzelle beeinflussen können, vermieden werden. Ferner kann z.B. auch während Messungen oder zwischen Messungen auf die Proben leichter zugegriffen werden.

In bevorzugter Ausgestaltung des Streulichtanalysesystems sind die mindestens zwei Aufnahmepositionen für jeweils eine Messzelle in einer Kreisbahn, bevorzugt in mindestens zwei konzentrischen Kreisbahnen angeordnet. Dies hat den Vorteil, dass pro Flächeneinheit eine größere Anzahl von Aufnahmepositionen angeordnet werden können. Ferner kann hierdurch der Probendurchsatz weiter erhöht werden.

In bevorzugter Ausgestaltung des Streulichtanalysesystems ist die Aufnahmeposition zur Aufnahme einer Messzelle mit ovalen, runden, rechteckigen, halbkugelförmigen, und/oder polygonen Querschnitten geeignet. Dies ist vorteilhaft, da je nach Anforderungen an das Streulichtanalysesystem und/oder dessen Messeigenschaften Messzellen mit bestimmen Querschnitten vorteilhaft sein können.

Eine weitere bevorzugte Ausgestaltung des Streulichtanalysesystems umfasst mindestens eine Messzelle mit rechteckigen, polygonen, ovalen und/oder runden Querschnitten.

Bei der Messzelle kann es sich z.B. um eine Küvette handeln, die aus Glas, Kunststoff oder Quarzglas bestehen kann. Auch Durchflussküvetten können im erfindungsgemäßen Streulichtanalysesystem als Messzelle eingesetzt werden.

Ein anderer Gegenstand der Erfindung ist ein Analysegerät, welches ein erfindungsgemäßes Streulichtanalysesystem umfasst.

Die Erfindung umfasst auch Verfahren zur Bestimmung der Konzentration, Menge und/oder Aktivität mindestens eines Analyten in einer Probe, wobei die Probe mit einem oder mehreren Reagenzien zu einem Reaktionsansatz vermischt wird und die Änderung der Absorption und/oder die Änderung der Intensität des gestreuten Lichts mit einem erfindungsgemäßen Streulichtmesssystem oder mit einem erfindungsgemäßen Analysegerät bestimmt wird, wobei die Änderung der Absorption und/oder die Änderung der Intensität des gestreuten Lichts mit der Konzentration, Menge und/oder Aktivität des Analyten korreliert.

Unter einer "Probe" ist im Sinne der Erfindung das Material zu verstehen, dass die nachzuweisende Substanz (den Analyten), vermutlich enthält. Der Begriff Probe umfasst insbesondere biologische Flüssigkeiten von Menschen oder Tieren wie z.B. Blut, Plasma, Serum, Sputum, Exudat, bronchoalveoläre Lavage, Lymphflüsigkeit, Synovialflüssigkeit, Samenflüssigkeit, Vaginalschleim, Feces, Urin, Liquor, aber auch z.B. durch Homogenisation oder Zelllyse für die nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Die erfindungsgemäßen Gegenstände und Verfahren der vorliegenden Patentanmeldung werden außerdem in den Patentansprüchen beschrieben.

### Ausführungsformen der Erfindung werden anhand von Zeichnungen exemplarisch näher erläutert. Darin zeigen:

- FIG 1: schematisch den Aufbau und den Lichtstrahlengang in einem Streulichtanalysesystem (1) mit einer Messzelle (2) in der Aufnahmeposition (4),
- FIG 2: schematisch den Aufbau und den Lichtstrahlengang in einem Streulichtanalysesystem (1) mit einer Messzelle (2) in der Aufnahmeposition (4) und einer Stoppblende (16) zwischen der Aufnahmeposition (4) und dem Fotodetektor (6). Die Messzelle ist relativ zu der Messeinheit beweglich aufgebaut.

Gleiche Teile sind in allen Figuren mit denselben Bezugszeichen versehen.

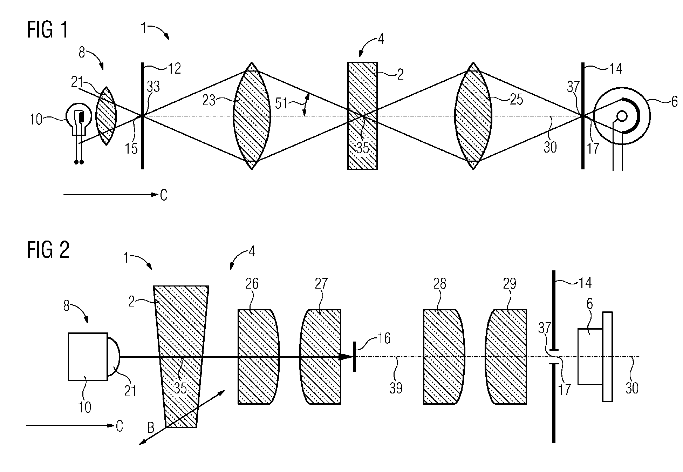

Die Streulichtanalysesysteme (1) gemäß der FIG 1 und FIG 2 zeigen verschiedene, bevorzugte Ausführungsformen eines erfindungsgemäßen Streulichtanalysesystems. Dabei können Gegenstände der verschiedenen, bevorzugten Ausführungsformen beliebig miteinander kombiniert werden, um weitere erfindungsmäße Ausführungsformen zu erhalten.

Das Streulichtanalysesystem (1) gemäß der FIG 1 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Transporteinrichtungen sowie weiterhin eine Steuereinheit zum automatisierten Auswerten der Analysen.

Das Streulichtanalysesystem (1) umfasst eine Aufnahmeposition (4) für eine Messzelle (2). Es umfasst weiterhin einen Fotodetektor (6), der die Stärke von Lichteinfall auf einer vorgegebenen Fläche positionsgenau messen kann und ein Mittel (8) zur Erzeugung eines Strahlenbündels, das eine Lichtquelle (10) und eine vorgeschaltete Linse (21), eine Blende (12) mit einer Blendenöffnung (15) und eine weitere Linse (23) umfasst.

Das von der Laserdiode erzeugte Strahlenbündel ist in die durch einen Pfeil angezeigte Richtung C gerichtet und trifft auf die Linse (21) und bildet einen Fokus (33) im Bereich einer Blendenöffnung (15) in einer Blende (12) aus. Das Strahlenbündel tritt teilweise durch die Blendenöffnung (15) und trifft auf eine weitere Linse (23), die einen Fokus (35) in der Messzelle (2) in der Aufnahmeposition (4) erzeugt. Das Mittel (8) zur Erzeugung eines Strahlenbündels emittiert somit ein konvergentes Laserlicht-Strahlenbündel, das in die durch einen Pfeil angezeigte Richtung C gerichtet ist.

Dabei spannt das konvergente Strahlenbündel zwischen der Linse (23) und der Aufnahmeposition (4) mit der optischen Achse (30) einen Winkel (51) auf. Nach Austritt aus der Messzelle (2) ist das Strahlenbündel divergent und trifft auf eine Linse (25), die einen Fokus (37) des Strahlenbündels im Bereich einer Blendenöffnung (17) in einer Blende (14) erzeugt. Das Strahlenbündel tritt teilweise durch die Blendenöffnung (17) und trifft auf den Fotodetektor (6).

Durch in der Messzelle (2) befindlichen Partikel und/oder Partikelaggregate, die z.B. im Verlauf einer Antigen-Antikörper-Reaktion entstehen oder sich vermindern, wird das Strahlenbündel gestreut, so dass nur noch ein Teil ungestreut die Messzelle (2) verlässt. Bei diesem Teil handelt es sich um den Primärstrahl. Ein weiterer Teil des Lichts wird gestreut, was im Allgemeinen zu einer Aufweitung des Strahlenbündels führt.

Im Bereich des Fokus (35) innerhalb der Messzelle (2) gestreutes Licht tritt divergent aus der Messzelle (2) aus und trifft auf eine Linse (25) und wird von dieser in den Fokus (37) abgebildet und tritt durch die Blendenöffnung (17) und trifft auf den Fotodetektor (6). Der Fotodetektor ermittelt beispielsweise die Stärke des auftreffenden Lichts.

Licht, das nicht im Bereich des Fokus (35) gestreut wurde, sondern beispielsweise an den Wänden der Messzelle oder in Bereichen außerhalb des Fokus (35) aber innerhalb der Messzelle, tritt nicht durch die Blendenöffnung (17), sondern trifft auf die Blende (14) und wird absorbiert und/oder reflektiert und trifft nicht auf den Fotodetektor (6).

Somit findet eine Trennung statt von Licht, welches im Bereich des Fokus (35) gestreut wird und Licht, welches außerhalb des Fokus (35) gestreut wird.

Die Linsen (21, 23, 25) sind als Sammellinsen ausgelegt.

Die Funktion der Blende (14) mit der Blendenöffnung (17) kann auch von einem geeigneten Fotodetektor (6) erfüllt werden. Beispielsweise kann der Fotodetektor (6) eine Apertur aufweisen, die als Blende (14) mit der Blendenöffnung (17) wirkt, oder die aktive, lichtempfindliche Fläche des Detektors selbst kann aufgrund ihrer Größe und Form als Blende (17) mit der Blendenöffnung (17) wirken.

Der Fotodetektor (6) ist an die erwähnte Steuereinheit angeschlossen und ermöglicht hier eine Auswertung des Streulichts. Sämtliche beschriebenen Bauteile können in einem Gehäuse (nicht gezeigt) untergebracht sein.

Das Streulichtanalysesystem (1) gemäß der FIG 2 ist ebenfalls eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiervorrichtungen und Transporteinrichtungen sowie weiterhin eine Steuereinheit zum automatisierten Auswerten der Analysen.

Das Streulichtanalysesystem (1) umfasst eine Aufnahmeposition (4) für eine Messzelle (2), die in Richtung B bewegbar ist. Die Richtungen B und C stehen senkrecht aufeinander. Das Streulichtanalysesystem (1) umfasst weiterhin einen Fotodetektor (6), der die Stärke von Lichteinfall auf einer vorgegebenen Fläche positionsgenau messen kann und ein Mittel (8) zur Erzeugung eines Strahlenbündels, das eine Laserdiode (10) und eine vorgeschaltete Linse (21) und/oder ein Linsensystem (nicht gezeigt) und eine Blende (nicht gezeigt) umfasst. Das (8) Mittel zur Erzeugung eines Strahlenbündels emittiert somit ein konvergentes Laserlicht-Strahlenbündel. Dieses ist in die durch einen Pfeil angezeigte Richtung C gerichtet. Das Strahlenbündel bildet einen Fokus (35) in der Messzelle (2) in der Aufnahmeposition (4).

Die Messzelle (2) weistdie Form eines Kegelstumpfes auf. Alternativ weist die Messzelle (2) beispielsweise die Form eines geraden Kreiszylinders auf.

Nach Austritt aus der Messzelle (2) ist das Strahlenbündel divergent und trifft dann auf eine Linse (26) und eine Linse (27), die einen Fokus (39) des Strahlenbündels im Bereich zwischen einer Stoppblende (16) und einer weiteren Linse (28) ausbilden. Nach Austritt aus der Linse (27) trifft das Strahlenbündel teilweise auf die Stoppblende (16) und wird von dieser absorbiert und/oder reflektiert und trifft nicht auf den Fotodetektor (6). Bei diesem Teil des Strahlenbündels handelt es sich im Wesentlichen um den ungestreuten Primärstrahl. Ein anderer Teil des Strahlenbündels bildet nach Austritt aus der Linse (27) einen Fokus (39) aus und trifft divergent auf eine Linse (28) und auf eine Linse (29), welche einen Fokus (37) in einer Blendenöffnung (17) in einer Blende (14) erzeugen. Das Strahlenbündel tritt teilweise durch die Blendenöffnung (17) und trifft auf den Fotodetektor (6) und teilweise auf die Blende (14) und wird von dieser absorbiert und/oder reflektiert und trifft nicht auf den Fotodetektor (6).

Die Stoppblende (16) befindet sich zwischen der Linse (27) und dem Fokus (39). Alternativ befindet sich die Stoppblende (16) in unmittelbarer räumlicher Nähe zu der Linse (27) oder in einer Ebene senkrecht zur optischen Achse (30) im Bereich des Fokus (39).
Der Fokus (35) in der Messzelle (2), die in der Aufnahmeposition (4) angeordnet ist und der Fokus (37) der Blendenöffnung (17) in der Blende (14) sind konfokal angeordnet.

Durch in der Messzelle (2) befindliche Partikel und/oder Partikelaggregate, die z.B. im Verlauf einer Antigen-Antikörper-Reaktion entstehen oder sich vermindern, wird das Strahlenbündel gestreut, so dass nur noch ein Teil ungestreut die Messzelle (2) verlässt. Bei diesem Teil handelt es sich um den Primärstrahl. Ein weiterer Teil des Lichts wird gestreut, was im Allgemeinen zu einer Aufweitung des Strahlenbündels führt.

Im Bereich des Fokus (35) innerhalb der Messzelle (2) gestreutes Licht tritt divergent aus der Messzelle (2) aus und trifft auf die Linsen (26, 27) und wird von diesen in den Fokus (39) abgebildet, bevor das gestreute Licht auf die Linsen (28, 29) trifft, von denen das gestreute Licht in den Fokus (37) abgebildet wird und durch die Blendenöffnung (17) auf den Fotodetektor (6) trifft. Der Fotodetektor ermittelt beispielsweise die Stärke des auftreffenden Lichts.

Licht, das nicht im Bereich des Fokus (35) gestreut wurde, sondern beispielsweise an den Wänden der Messzelle oder in Bereichen außerhalb des Fokus (35) aber innerhalb der Messzelle, tritt nicht durch die Blendenöffnung (17), sondern trifft auf die Blende (14) und wird absorbiert und/oder reflektiert und trifft nicht auf den Fotodetektor (6).

Somit findet eine Trennung statt von Licht, welches im Bereich des Fokus (35) gestreut wird und Licht, welches außerhalb des Fokus (35) gestreut wird. Ferner wird durch die Stoppblende (16) das Licht des Primärstrahls abgetrennt.

Die Linsen (21, 26, 27, 28, 29) sind als Sammellinsen ausgelegt.

Der Fotodetektor (6) ist an die erwähnte Steuereinheit angeschlossen und ermöglicht hier eine Auswertung der Streuung des vom Mittel zur Erzeugung eines Strahlenbündels (8) emittierten Strahlenbündels. Sämtliche beschriebenen Bauteile können in einem Gehäuse (nicht gezeigt) untergebracht sein.

Bei einer Veränderung der Position des Primärstrahls relativ zur Messzelle, beispielsweise aufgrund einer Bewegung der Messzelle, ändert sich die Position des Bildpunktes in der konfokalen Bildebene nur vergleichsweise wenig. Bei Verschiebung der Aufnahmeposition (4) mit einer Messzelle (2) entlang Richtung B um beispielsweise 1 mm aus der mittigen Stellung relativ zur optischen Achse (30) wandert der Bildpunkt in der konfokalen Bildebene (Ebene der Blende 14) bzw. auf dem Fotodetektor (6) um weniger als 10 µm.

### Bezugszeichenliste

- 1: Streulichtanalysesystem
- 2: Messzelle
- 4: Aufnahmeposition
- 6: Fotodetektor
- 8: Mittel zur Erzeugung eines Strahlenbündels
- 10: Lichtquelle
- 12, 14,: Blende
- 15, 17: Blendenöffnung
- 16: Stoppblende
- 21, 23, 25, 26, 27, 28, 29: Linse
- 30: Optische Achse
- 33, 35, 37, 39: Fokus
- 51: Winkel
- B, C: Richtung

## Patentansprüche

1. Streulichtanalysesystem (1) mit mindestens einem Mittel (8) zur Erzeugung eines Strahlenbündels entlang einer optischen Achse (30), mindestens einer Aufnahmeposition (4) für eine Messzelle (2), mindestens einem Mittel (25, 26, 27, 28, 29) zur Fokussierung eines Strahlenbündels, mindestens einer Blende (14) mit einer definierten Öffnung (17) und mindestens einem Fotodetektor (6), wobei das Mittel (8) zur Erzeugung eines Strahlenbündels ein in mindestens einer Richtung senkrecht zur optischen Achse (30) konvergentes Strahlenbündel erzeugt und wobei das Mittel (8) zur Erzeugung eines Strahlenbündels, die Aufnahmeposition (4) für eine Messzelle (2), das Mittel (25, 26, 27, 28, 29) zur Fokussierung eines Strahlenbündels, die Blende (14) und der Fotodetektor (6) derart angeordnet sind, dass das konvergente Strahlenbündel in einer in der Aufnahmeposition (4) angeordneten Messzelle (2) einen ersten Fokus (35) ausbildet und nach dem Durchtritt durch eine in der Aufnahmeposition (4) angeordnete Messzelle (2) wenigstens teilweise auf das Mittel (25, 26, 27, 28, 29) zur Fokussierung eines Strahlenbündels trifft und wobei das Strahlenbündel nach Wechselwirkung mit dem Mittel (25, 26, 27, 28, 29) zur Fokussierung des Strahlenbündels einen zweiten Fokus (37) ausbildet und wobei die Öffnung (17) der Blende (14) im Bereich des zweiten Fokus (37) positioniert ist, und das Strahlenbündel dann wenigstens teilweise auf den Fotodetektor (6) trifft.

2. Streulichtanalysesystem (1) nach Anspruch 1, wobei das Strahlenbündel in einer in der Aufnahmeposition (4) angeordneten Messzelle (2) in zwei zueinander senkrechten Richtungen senkrecht zur optischen Achse (30) einen ersten Fokus (35) ausbildet.

3. Streulichtanalysesystem (1) nach einem der vorhergehenden Ansprüche, wobei das konvergente Strahlenbündel und die optische Achse (30) in mindestens einem Bereich zwischen dem Mittel (8) zur Erzeugung eines Strahlenbündels und der Aufnahmeposition (4) für eine Messzelle (2) einen Winkel (51) von 2 bis 45 Grad, bevorzugt von 5 bis 25 Grad, ganz besonders bevorzugt von 5 bis 15 von Grad aufspannen.

4. Streulichtanalysesystem (1) nach einem der vorhergehenden Ansprüche, wobei das Mittel (8) zur Erzeugung des Strahlenbündels eine Lichtquelle (10) und eine Linse (21) umfasst, wobei die Linse (21) zwischen der Lichtquelle und der Aufnahmeposition (4) für eine Messzelle (2) angeordnet ist und wobei die Linse (21) den ersten Fokus (35) des Strahlenbündels erzeugt.

5. Streulichtanalysesystem (1) nach einem der vorhergehenden Ansprüche, wobei der erste Fokus (35) des Strahlenbündels im Zentrum des Querschnitts einer in der Aufnahmeposition (4) angeordneten Messzelle (2) liegt.

6. Streulichtanalysesystem (1) nach einem der vorhergehenden Ansprüche, wobei zwischen der Aufnahmeposition (4) für die Messzelle (2) und dem Fotodetektor (6) eine Stoppblende (16) positioniert ist, so dass der nicht innerhalb einer in der Aufnahmeposition (4) angeordneten Messzelle (2) gestreute Teil des Strahlenbündels wenigstens teilweise, bevorzugt vollständig auf die Stoppblende (16) trifft.

7. Streulichtanalysesystem (1) nach Anspruch 6, wobei die Stoppblende (16) in der Form eines Ovals oder eines Kreises ausgebildet ist.

8. Streulichtanalysesystem (1) nach einem der Ansprüche 6 und 7, wobei bei leerer Messzelle (2) und/oder ohne Messzelle (2) in der Aufnahmeposition (4) das Strahlenbündel wenigstens teilweise nicht auf die Stoppblende (16) trifft und wobei das Strahlenbündel wenigstens teilweise auf den Fotodetektor (6) trifft.

9. Streulichtanalysesystem (1) nach einem der vorhergehenden Ansprüche, das mindestens zwei Aufnahmepositionen (4) für jeweils eine Messzelle (2) aufweist und wobei wenigstens das Mittel (8) zur Erzeugung eines Strahlenbündels, das Mittel (25) zur Fokussierung eines Strahlenbündels, die Blende (14) mit einer definierten Öffnung (17) und der Fotodetektor (6) relativ zu den mindestens zwei Aufnahmepositionen (4) bewegbar sind, vorzugsweise auf einer Kreisbahn bewegbar.

10. Streulichtanalysesystem (1) nach Anspruch 9, wobei die mindestens zwei Aufnahmepositionen (4) für jeweils eine Messzelle (2) in einer Kreisbahn, bevorzugt in mindestens zwei konzentrischen Kreisbahnen angeordnet sind.

11. Streulichtanalysesystem (1) nach einem der vorhergehenden Ansprüche, wobei die Aufnahmeposition (4) zur Aufnahme einer Messzelle (2) mit ovalen, runden, rechteckigen, halbkugelförmigen und/oder polygonen Querschnitten geeignet ist.

12. Analysegerät umfassend ein Streulichtanalysesystem (1) nach einem der vorhergehenden Ansprüche.

13. Verfahren zur Bestimmung der Konzentration, Menge und/oder Aktivität mindestens eines Analyten in einer Probe **dadurch gekennzeichnet, dass** die Probe in einer Messzelle (2) mit einem oder mehreren Reagenzien zu einem Reaktionsansatz vermischt wird und die Änderung der Absorption und/oder der Intensität des gestreuten Lichts des Reaktionsansatzes mit einem Streulichtmesssystem (1) gemäß einem der Ansprüche 1 - 11 oder mit einem Analysegerät gemäß Anspruch 12 bestimmt wird, wobei die Absorptionsänderung und/oder die Änderung der Intensität des gestreuten Lichts mit der Konzentration, Menge und/oder Aktivität des Analyten korreliert.

14. Verfahren nach Anspruch 13, wobei es sich bei der Probe um eine menschliche oder tierische Körperflüssigkeit handelt, vorzugsweise um Vollblut, Blutplasma, Serum, Liquor oder Urin.
